# EUROPÄISCHE PATENTANMELDUNG

(11) **EP 3 528 230 A1**
(43) Veröffentlichungstag der Anmeldung: **21.08.2019**
(21) Anmeldenummer: 18214968.2
(22) Anmeldetag: 20.12.2018
(51) Int. Cl.: G08G 1/16, G01S 15/93, G06N 3/04, G06K 9/00, G01S 17/02, G05D 1/02

(54) **VERFAHREN ZUR VERARBEITUNG VON SENSORDATEN IN EINER ANZAHL VON STEUERGERÄTEN, ENTSPRECHEND AUSGELEGTE VORVERARBEITUNGSEINHEIT SOWIE FAHRZEUG**

(30) Priorität: 23.01.2018 DE 102018200982
(71) Anmelder: VOLKSWAGEN AKTIENGESELLSCHAFT, 38440 Wolfsburg (DE)
(72) Erfinder: Schlicht, Peter, 38442 Wolfsburg (DE); Scholz, Stephan, 38527 Meine (DE)

(57) **Zusammenfassung**

Die Erfindung betrifft ein Verfahren zur Verarbeitung von Sensordaten in einer Anzahl von Steuergeräten eines Steuergeräteverbundes. Die Steuergeräte werden über wenigstens einen Kommunikationsbus (102, 104, 106) mit mindestens einem Sensor (112 - 114) verbunden sind, wobei die Sensordaten des wenigstens einen Sensors (112 - 114), von wenigstens zwei verschiedenen Steuergeräten (131 - 133) stufenweise verarbeitet werden. Dabei ist es so, dass wenigstens eine Verarbeitungsstufe in beiden Steuergeräten (131 - 133) übereinstimmt oder zumindest soweit äquivalent ist zu der anderen Stufe, dass die Ergebnisse der Verarbeitung durch eine Umrechnung ineinander übergeführt werden können. Die Erfindung zeichnet sich dadurch aus, dass eine Vorverarbeitungseinheit (110) vorgesehen wird, der die Sensordaten des wenigstens einen Sensors (112 - 114) zugeführt werden, wobei in der Vorverarbeitungseinheit (110) die Verarbeitung der Sensordaten in der wenigstens einen übereinstimmenden Verarbeitungsstufe (M11 & M21, M12 & M22, M13 & M23) durchgeführt wird, und die bearbeiteten Sensordaten an die wenigstens zwei verschiedenen Steuergeräte (131 - 133) zur individuellen Weiterverarbeitung weitergeleitet werden.

## Beschreibung

Die Erfindung betrifft das technische Gebiet der Erfassung, Aufbereitung und Verarbeitung von Sensordaten. Dabei werden die Sensordaten an mehrere Steuergeräte weitergeleitet, die diese wiederum für ihre individuelle Auswertung benötigen. Im Besonderen geht es dabei um die Bereitstellung von Sensordaten für die Umgebungserfassung bei einem Fahrzeug. Die Erfindung betrifft ebenso eine entsprechende ausgelegte Vorverarbeitungseinheit, ein Fahrzeug, das eine Vorverarbeitungseinheit aufweist, sowie ein entsprechend ausgelegtes Computerprogramm.

In modernen Fahrzeugen wird eine Vielzahl von Steuergeräten verbaut. Allein für den Antriebsstrang wird eine Anzahl Steuergeräte eingesetzt, so z.B. Motor-Steuergerät, Getriebe-Steuergerät, ESP-Steuergerät und weitere. Zu erwähnen ist auch die Klasse der Steuergeräte, die für Regelungen im Fahrwerksbereich zuständig ist. Solche sind Steuergeräte zur elektronischen Fahrwerkseinstellung oder Steuergeräte zur Fahrdynamik-Regelung oder Steuergeräte, die als Lenkhilfe fungieren, wie z.B. die geschwindigkeitsabhängige Servolenkung. Darüber hinaus gibt es Steuergeräte, die bestimmte Funktionen zur Fahrerassistenz übernehmen. Solche sind z.B. ein Geschwindigkeitsregel-Steuergerät, ein Abstandsregel-Steuergerät, eine Einparkhilfe, ein Notbremsassistenten-Steuergerät usw. Daneben gibt es auch noch weitere Steuergeräte, die im Bereich der Fahrzeugkarosserie verbaut werden, und für bestimmte Komfortfunktionen sorgen. Als Beispiele werden die Tür- oder Fensterheber-Steuergeräte, Klimaanlage-Steuergeräte, Sitzverstellungs-Steuergeräte, Airbag-Steuergeräte u.a. genannt. Dann gibt es weiterhin die Klasse der Sensoren wie multiple Kameras zur Umfeldbeobachtung, Navigationsgerät, RADAR- oder LIDAR-Gerät, Kommunikationsmodul und Entertainmentmodul mit TV, Radio, Video und Musik-Funktion usw.

Typischerweise werden die Steuergeräte der verschiedenen Kategorien jeweils mit einem separaten, für die Gerätekategorie entsprechend ausgelegten Bus vernetzt. Es können daher mehrere verschiedene Bussysteme im Fahrzeug eingesetzt werden. Die verschiedenen Bussysteme können dabei über Gateways miteinander verbunden sein, um einen Datenaustausch zu ermöglichen. Im Bereich der Antriebstrang-Steuergeräte wird typischerweise der CAN-Bus eingesetzt, ebenfalls im Bereich der Komfort-Steuergeräte. Im Infotainment-Bereich kommen auch andere Bussysteme zum Einsatz, wie Bussysteme die auf Ethernet-Technologie beruhen, z.B. AVB (Audio Video Bridging) der auf der Standard-Familie nach IEEE 802.3 Standard basiert. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus).

Der dominierende Bus im Kfz-Bereich ist der CAN-Bus (Controller Area Network) gemäß ISO-Norm. Der CAN-Bus wurde in den achtziger Jahren entwickelt und 1994 standardisiert. Die entsprechende ISO-Norm hat die Nummer ISO 11898. Es gibt eine Norm für den Highspeed-Bereich bis 1 Mbit/s, das ist die Norm ISO 11898-2. Dann gibt es eine Norm für den Lowspeed-Bereich bis 125 kBit/s, das ist die Norm ISO 11898-3. Durch das anwachsende Datenaufkommen ergeben sich immer höhere Buslasten auf den CAN-Bussen. Dies führte zu einer Weiterentwicklung des CAN-Busses. Der erweiterte CAN-Bus ist unter dem Begriff CAN FD-Bus bekannt. FD steht dabei für Flexible Data Rate. Bei dieser CAN-Bus Variante wird die Datenrate umgeschaltet. Für die Arbitrierungsphase bleibt die Datenrate niedrig, wie beim klassischen CAN-Bus. Für die Übertragung der Nutzdaten wird auf eine höhere Datenrate umgeschaltet. Überträgt man die Nutzdaten einer CAN-FD-Botschaft schneller, so verkürzt sich die Dauer der Busbelegung; und die Buslast verringert sich. Wenn die Übertragungsdauer im gleichen Rahmen bleibt wie bei den klassischen CAN-Botschaften, könnten größere Datenmengen mit einer CAN-FD-Botschaft transportiert werden. So wurde es auch bei CAN FD realisiert. Statt des 8 Byte langen Nutzdatenfeldes wird bei CAN FD ein 64 Byte langes Nutzdatenfeld eingesetzt. Die Datenrate steigt für die Übertragung des Nutzdatenfeldes bei einer Umsetzung z.B. von 500 kbit/s auf 2 Mbit/s an.

In der Automobilindustrie ist in Bezug auf Menge und Komplexität der im Fahrzeug verbauten elektrischen Systeme ein Trend zu erkennen die Anzahl der Fahrzeugfunktionen, die durch Elektronik realisiert bzw. unterstützt werden, nimmt deutlich zu. Dieser Trend verstärkt sich durch Entwicklungen im Bereich des kooperativen oder autonomen Fahrens. Um dem Rechnung zu tragen, werden schon seit längerem nicht mehr individuelle Sensoren pro Steuergerät verbaut, sondern es werden die Sensoren an Bussysteme angeschlossen, die auch mit den Steuergeräten verbunden sind. Somit können die Sensordaten an alle Steuergeräte weitergeleitet werden, die diese Sensordaten benötigen.

Die Funktionsentwicklungen des (teil)automatischen Fahrens beruhen auf einer Vielzahl von Sensoren, die im Rahmen von Wahrnehmung, Szenenverständnis, Lokalisierung und Prädiktion verarbeitet werden müssen. Dabei kommen auch bildverarbeitende neuronale Netze, sogenannte Convolutional Neural Networks (CNNs) zum Einsatz. Hierbei wird analog zu klassischer Signalverarbeitung, das eingehende Quellen-Signal von Sensoren wie Videokamera, Radar entsprechend Radio Detection and Ranging, Lidar entsprechend Light Detection and Ranging, Ultraschall- oder Infrarot-Sensor) durch mehrere Stufen verarbeitet. Dazu zählen insbesondere eine oder mehrere Filterstufen, die die wesentlichen Komponenten des Signals ausfiltern. Ziel der Signalverarbeitung ist es Merkmalskarten (Feature Maps) zu bilden.

Bei der Vielzahl an verarbeitenden Modulen kommt es dabei fast zwangsläufig zum Anwenden von (für die Weiterverarbeitung hinreichend) äquivalenten Filtern in mehreren CNNs. Somit besteht noch das Problem, dass bestimmte Steuergeräte die Sensordaten in gleicher oder aber zumindest in ähnlicher Weise verarbeiten müssen. Die Weiterleitung der Sensorrohdaten zu den verschiedenen Steuergeräten verursacht auf dem Kommunikationsbus möglicherweise ein hohes Datenaufkommen, was eine zu hohe Busauslastung zur Folge haben kann. Darüber hinaus besteht das Problem, dass die Steuergeräte die entsprechende Rechenkapazität aufweisen müssen um die jeweils gleiche oder ähnliche Verarbeitung der Sensordaten durchführen zu können. Je nachdem wie viele Steuergeräte die gleichen Sensordaten verarbeiten müssen, kann die sich ergebende Mehrfachausführung von Bildverarbeitungsschritten zu einem erhöhten Rechen- und damit Hardware-, Zeit- und Energiebedarf führen. Das Problem des erhöhten Energieverbrauchs spielt insbesondere für Elektrofahrzeuge eine große Rolle.

Aus der DE 10 2015 104 934 A1 ist es bekannt bei der Umfeldbeobachtung eines Kraftfahrzeuges die Informationen über den Freiraum, d.h. den Raum ohne erkannte Objekte, als Sensorrohdaten in einer sensorseitigen Steuereinheit abzulegen. Die Informationen werden über eine Kommunikationsschnittstelle an eine Verarbeitungseinrichtung weitergeleitet, die eine Umgebungsbereichskarte erstellt.

Aus der DE10 2015 210 881 A1 ist ein Verfahren und eine Vorrichtung zur Bestimmung der Position und /oder der Orientierung eines Fahrzeuges bekannt. Dabei sind wenigstens zwei Sensoren vorgesehen, deren Daten fusioniert werden. Für die Gütebewertung wird ein neuronales Netz eingesetzt.

Aus der DE 10 2015 220 616 A1 ist ein Verfahren und eine Vorrichtung zur Bereitstellung und Auswertung von Sensordaten bekannt, bei dem der Ansatz verfolgt wird, die Auswertung der Sensordaten ausschließlich in der Auswerteeinheit des Kraftfahrzeuges zu machen. Die Auswertung erfolgt nicht extern, d.h. die Sensoreinheit übermittelt nicht verarbeitete Sensordaten sondern Sensor-Rohdaten.

Aus der US 2017/0039436 A1 ist es bekannt CNN's einzusetzen um Bilddaten von LIDAR-Sensoren auszuwerten. Damit werden bestimmte Merkmale aus den Bildern extrahiert, insbesondere die Fahrstreifenmarkierungen.

Aus der US 2017/0300763 A1 ist es bekannt solche Merkmale von Videokameradaten zu extrahieren. Auch dafür werden CNN's eingesetzt. Die Ergebnisse der Bildauswertungen von mehreren Kameras werden dabei zu einem Gesamtergebnis fusioniert.

Die Erfindung setzt sich zum Ziel ein Verfahren zur Verarbeitung von Sensordaten anzugeben, das die oben beschriebenen Nachteile vermeidet. Insbesondere soll der Rechenaufwand für die Mehrfachauswertung der Sensordaten in den verschiedenen Steuergeräten verringert werden.

Diese Aufgabe wird durch ein Verfahren zur Verarbeitung von Sensordaten in einem Kommunikationsnetzwerk, an das mehrere die Sensordaten verarbeitende Recheneinheiten angeschlossen sind, gemäß Anspruch 1, eine entsprechend ausgelegte Vorverarbeitungseinheit gemäß Anspruch 10 sowie ein entsprechend ausgelegtes Fahrzeug gemäß Anspruch 15 gelöst.

Die abhängigen Ansprüche beinhalten vorteilhafte Weiterbildungen und Verbesserungen der Erfindung entsprechend der nachfolgenden Beschreibung dieser Maßnahmen.

Der zentrale Gegenstand der Erfindung betrifft ein Verfahren und eine Recheneinheit zur Verarbeitung von Sensorinformationen durch neuronale Netze für das konsolidierte Weiterverarbeiten entlang der Verarbeitungskette des (teil)automatischen Fahrens.

Hierbei wird ggfs. mit einem Optimierungsverfahren aus einem bestehenden Satz an CNNs eine Menge (KONSOL) an Merkmalskarten bestimmt, auf der die nachfolgenden KI-Module ggfs. in adaptierter Form ihre Funktion ohne Einschränkung ausführen können. Die Merkmalskarten werden durch neuronale Netze aus dem eingehenden Datenstrom errechnet und allen Modulen und Steuergeräten des (teil)automatischen Fahrens zur Verfügung gestellt.

Insbesondere bei der Umgebungs-Wahrnehmung bei Fahrzeugen im Straßenverkehr werden KI-Module, häufig tiefe neuronale Netze mit Faltungsschichten eingesetzt. Eine Vorverarbeitung der Rohdaten in Form einer Auslagerung der ersten Faltungsschichten (konsolidiert über die verarbeitenden KI-Module), in Richtung Sensorik komprimiert die Daten und definiert eine funktionsspezifische Schnittstelle zwischen Sensorik und Weiterverarbeitung, die ein Weiterentwickeln von Sensorik auf der einen und der verarbeitenden Module auf der anderen Seite erlaubt und so sowohl den technischen Fortschritt erleichtert als auch einen Wettbewerbsvorteil bietet.

Konkret betrifft der Vorschlag ein Verfahren zur Verarbeitung von Sensordaten in einer Anzahl von Steuergeräten, wobei die Steuergeräte über wenigstens einen Kommunikationsbus mit dem mindestens einen Sensor verbunden sind. Dabei werden die Sensordaten des wenigstens einen Sensors von wenigstens zwei verschiedenen Steuergeräten stufenweise verarbeitet. Wenigstens eine Verarbeitungsstufe stimmt in beiden Steuergeräten überein oder ist zumindest äquivalent. Dabei bedeutet Äquivalenz, dass die Ergebnisse der Verarbeitung durch eine Umrechnung ineinander übergeführt werden können. Das Verfahren ist dadurch gekennzeichnet, dass eine Vorverarbeitungseinheit vorgesehen wird, der die Sensordaten des wenigstens einen Sensors zugeführt werden, wobei in der Vorverarbeitungseinheit die Verarbeitung der Sensordaten in der wenigstens einen übereinstimmenden Verarbeitungsstufe durchgeführt wird, und die bearbeiteten Sensordaten an die wenigstens zwei verschiedenen Steuergeräte zur individuellen Weiterverarbeitung weitergeleitet werden. Die Vorteile dieses Verfahrens, bestehen in einer Einsparung von Rechenzeit bzw. Rechenleistung bei dem einzelnen Steuergerät. Dies wirkt sich so aus, dass der Hardwarebedarf verringert wird und/oder, dass der Energiebedarf verringert wird und dementsprechend sich auch der Aufwand für die Wärmeabfuhr verringert. Ein wichtiger Vorteil besteht auch darin, dass weniger Daten zu den Steuergeräten übertragen werden müssen, wodurch die Busauslastung sich verringert bzw. mehr Buskapazität für andere Anwendungen zur Verfügung steht. Das Vorverarbeiten der Sensordaten kann nämlich zu einer Komprimierung des Datenstromes führen, der an die Steuergeräte weitergeleitet wird, und damit die Bussysteme im Fahrzeug bei der Anwendung im (teil)automatischen Fahren entlasten. Dieses Verfahren ermöglicht auch eine Modularisierung von Systemen für (teil)automatische Fahrfunktionen. Es wird auch die Möglichkeit einer Standardisierung einer Schnittstelle für die Weiterleitung der vorverarbeiteten Sensordaten eröffnet. Ein Vorteil dieser Schnittstellenstandardisierung liegt in der Flexibilität für die Auswahl angeschlossener und die Schnittstelle bedienender Sensorik.

Für die Realisierung ist es vorteilhaft, wenn die Umrechnung (Adaption) zur Überführung der Rechenergebnisse in dem Steuergerät durchgeführt wird, das die Rechenergebnisse in der umgerechneten Form für die individuelle Weiterverarbeitung benötigt.

Das Verfahren kann vorteilhaft eingesetzt werden bei der Verarbeitung der Daten von bildgebenden Sensoren. Dabei würden die wenigstens zwei verschiedenen Steuergeräte zwei bildverarbeitende Steuergeräte betreffen.

Typische Maßnahmen der stufenweisen Verarbeitung des bildgebenden Sensors entsprechen einer Bildverarbeitung, bei der eine Filterung und/oder eine Bildverarbeitung mittels neuronalen Netzes, insbesondere eines Convolutional Neural Network CNN durchgeführt wird.

Dabei wird in vorteilhafter Weise durch die Bildverarbeitung in einer Stufe ein typisches Merkmal im Bild extrahiert wird und eine Merkmalskarte gebildet.

Die erfindungsgemäße Konsolidierung von Verarbeitungsstufen geschieht durch die Verlegung und damit Konzentration einer Anzahl von typischen Merkmalen extrahierenden Stufen in die Vorverarbeitungseinheit. Die betroffenen Stufen müssen dadurch nicht mehrfach in den weiterverarbeitenden Steuergeräten vorgesehen werden.

Typische Merkmale in Bildern, die durch entsprechende CNN's extrahiert werden können sind Kanten, Konturen, Linien, Flächen, Kontrast, Helligkeit, Farbe, Schärfe, Rauschanteil, usw.

Die Vorverarbeitungseinheit kann vorteilhaft als separate Recheneinheit an den Kommunikationsbus angeschlossen, als Modul eines Steuergerätes, das die Sensordaten ebenfalls verarbeiten muss, oder als Modul eines zentralen Gateway-Steuergerätes vorgesehen werden.

Als Kommunikationsbus kommt ein serieller Kommunikationsbus, der im Fahrzeugbereich eingesetzt wird, in Betracht. Insbesondere kann er von dem Typ eines CAN-Busses, entsprechend Controller Area Network-Bus, eines CAN-FD Busses, entsprechend Controller Area Network-Bus Flexible Data Rate, oder eines FlexRay-Busses, oder eines Ethernet-Busses sein.

Für eine entsprechende Vorverarbeitungseinheit, die zur Durchführung des erfindungsgemäßen Verfahrens dient, ergeben sich die gleichen Vorteile, wie bei den entsprechenden Maßnahmen im Zusammenhang mit dem Verfahren erläutert.

Die Vorverarbeitungseinheit sorgt für ein Anpassen des Ausgabedatenstromes eines oder mehrerer Sensoren an das Schnittstellenformat. Diese Vorverarbeitungseinheit ist sensormodelltypspezifisch sorgt aber im Kern für eine effiziente sensoragnostische Datenübertragung.

Das Schnittstellenformat stellt eine funktionsspezifische Komprimierung der Sensorinformationen dar und ist unabhängig vom Sensormodell. Funktionsspezifisch bedeutet hierbei ausdrücklich nicht eine Abhängigkeit der Schnittstelle von einer Teilfunktionalität, sondern vielmehr eine Spezifizität gegenüber der bedienten Funktion, beispielsweise der gesamten Verarbeitungskette des (teil)automatischen Fahrens. Der Schnittstelle gehorchende komprimierte Sensordaten erlauben ein verlustfreies Weiterverarbeiten der Informationen durch Folgekomponenten (ohne Verwendung der Rohinformationen), nicht aber zwangsläufig ein verlustfreies oder ansatzweise verlustfreies Wiederherstellen der Rohdaten. Es werden also alle semantisch, wie auch physikalisch für die Weiterverarbeitung relevante Eigenschaften der Rohdaten übertragen.

Die Schnittstelle stellt eine klar definierte Abgrenzung der funktionsspezifischen Verarbeitung der Sensorinformationen von der Datenbereitstellung durch die Sensoren dar. Die Schnittstelle wird durch Qualitätsansprüche und Definition der relevanten Merkmale (Features) definiert. Zu den Qualitätsansprüchen gehören sensormerkmalsspezifische Ansprüche wie Konfidenzen als auch Verarbeitungsansprüche wie maximal zulässige Latenzen.

Die aufgelisteten Vorteile gelten auch für ein Fahrzeug in dem eine entsprechende Vorverarbeitungseinheit verbaut ist.

Typische Anwendungsfälle für das vorgeschlagene Verfahren sind Kommunikationsnetzwerke im Kfz-Bereich. Dort werden vorwiegend serielle Bussysteme eingesetzt von dem Typ eines CAN-Busses, entsprechend Controller Area Network-Bus, eines CAN-FD Busses, entsprechend Controller Area Network-Bus Flexible Data Rate eines FlexRay-Busses, eines Ethernet-Busses oder eines LIN-Busses, entsprechend Linear Network-Bus.

Ausführungsbeispiele der Erfindung sind in den Zeichnungen dargestellt und werden nachfolgend anhand der Figuren näher erläutert.

Es zeigen:
- Fig. 1: ein Fahrzeug mit den Kfz-Elektronik-Komponenten für die Bereiche Antrieb, Fahrwerk und Fahrerassistenz;
- Fig. 2: ein Blockdiagramm für ein Fahrzeug-Kommunikationsnetzwerk für die Bereiche Antrieb, Fahrwerk und Fahrerassistenz;
- Fig. 3: das Prinzip der Individualverarbeitung der Sensordaten bei zwei Steuergeräten mit gleicher oder ähnlicher Merkmalsanalyse in entsprechenden Schichten; und
- Fig. 4: das Prinzip der gemeinsamen Vorverarbeitung der Sensordaten für die gleiche oder ähnliche Merkmalsanalyse in einer Vorverarbeitungseinheit bei zwei Steuergeräten.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

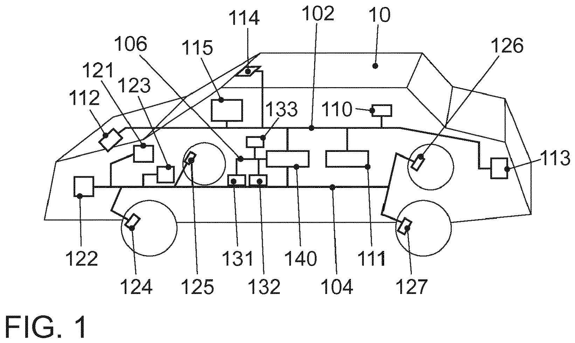

Fig. 1 zeigt ein Fahrzeug 10 mit verschiedenen elektronischen Komponenten. Dargestellt ist ein Personenkraftwagen Pkw. Als Fahrzeug kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Motorräder, Schienenfahrzeuge usw. Die Erfindung wäre allgemein bei Landfahrzeugen, Schienenfahrzeugen, Wasserfahrzeugen und Luftfahrzeugen einsetzbar. Der Einsatz der Erfindung ist primär für den Fahrzeugbereich gedacht. Allerdings kommt wie beim CAN-Bus auch der Einsatz im Feldbus-Bereich, also in der Automatisierungstechnik, Prozesstechnik, usw. in Frage.

Es wird eine Vielzahl von elektronischen Steuergeräten in einem modernen Kraftfahrzeug eingesetzt. In Fig. 1 ist die Vernetzung einiger Steuergeräte und Sensoren dargestellt. Dabei werden drei verschiedene Klassen von Steuergeräten unterschieden. Die Steuergeräte einer Klasse sind jeweils separat vernetzt. Verbunden sind die jeweiligen Kommunikationsbusse über ein zentrales Gateway-Steuergerät 140. Die Steuergeräte der Klasse der Steuergeräte für den Bereich Infotainment sind über den Bus 102 vernetzt. Daran angeschlossen sind die Komponenten On-Board Unit 111, RADAR-Sensor 112, Rückfahr-Kamera 113, Front-Kamera 114 und LCD-Anzeigeeinheit 115. Ebenfalls daran angeschlossen ist eine Vorverarbeitungseinheit 110 deren Funktion im Einzelnen nachfolgend noch genauer erläutert wird. Dabei dient der RADAR-Sensor 112 (entsprechend Radio Detection and Ranging) als Sensor zur Realisierung eines Radartempomaten oder zur Realisierung eines Abstandswarnungs- oder Kollisionswarnungsgerätes. Dazu kann auch ein LIDAR-Gerät (entsprechend Light Detection and Ranging) ergänzend oder alternativ eingesetzt werden (nicht gezeigt). Weitere Steuergeräte können angeschlossen sein, sind aber nicht dargestellt.

Die Steuergeräte der Klasse der Steuergeräte für den Antriebstrang sind über den Bus 104 vernetzt. Daran angeschlossen sind die Steuergeräte Motor-Steuergerät 121, ESP-Steuergerät 122 und Getriebe-Steuergerät 123. Weiterhin angeschlossen an den Bus 104 sind die Raddrehzahlsensoren 124 bis 127. Mit der Bezugszahl 129 ist eine Diagnoseschnittstelle bezeichnet. Weitere Steuergeräte und/oder Sensoren können angeschlossen sein, sind aber nicht dargestellt.

Die Steuergeräte der Klasse der Steuergeräte für den Bereich Fahrwerk und Fahrerassistenz sind über den Bus 106 vernetzt. Daran angeschlossen sind die Steuergeräte Fahrwerk-Steuergerät 131 und Notbremsassistenz-Steuergerät 132 und Abstandsregelungs-Steuergerät 133. Weitere Steuergeräte und/oder Sensoren können angeschlossen sein, sind aber nicht dargestellt.

Das Abstandsregelungs-Steuergerät 133 regelt basierend auf Bildauswertungen von Kamera-Sensoren (und möglicherweise weiteren Sensoren wie Radar und Lidar) die Geschwindigkeit des Fahrzeugs in Abhängigkeit des Abstandes und der Geschwindigkeit vorausfahrender Fahrzeuge.

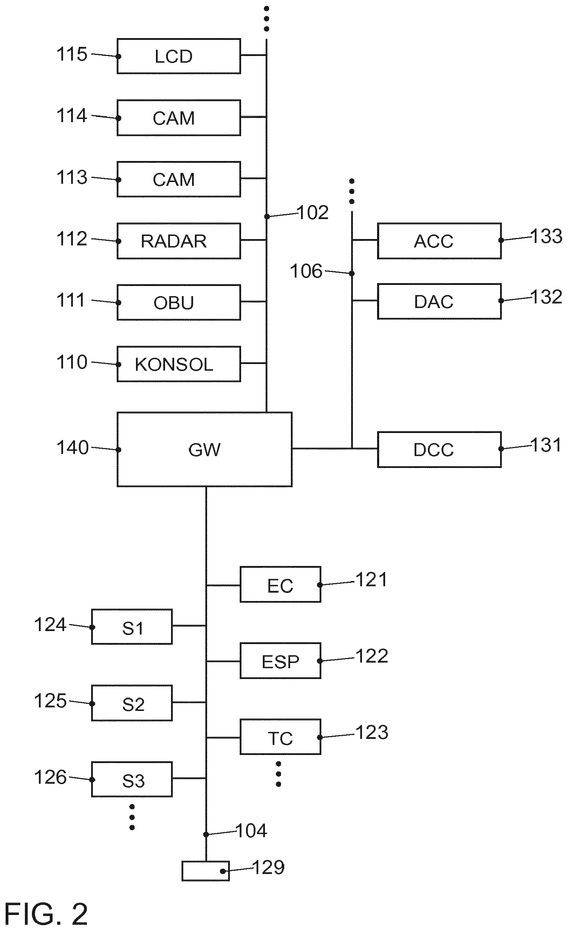

Fig. 2 zeigt das entsprechende Blockschaltbild für die Kfz-Elektronik in den Bereichen Infotainment, Antrieb, Fahrwerk und Fahrerassistenz. Gleiche Bezugszahlen bezeichnen in Fig. 2 dieselben Komponenten wie in Fig. 1. Die drei separaten Kommunikationsbusse 102, 104, 106 sind als lineare Busse ausgeführt. Dabei können die Busprotokolle für die Kommunikationsbusse 102, 104 und 106 nach den Bedürfnissen der dort vernetzten Steuergeräte ausgelegt sein. Z.B. könnte es sinnvoll sein, den Kommunikationsbus 106 für den Bereich Fahrwerk und Fahrerassistenz für eine höhere Datenrate auszulegen als die beiden Kommunikationsbusse 102 und 104. Auf Sensorsignale, die für das Fahrwerk relevant sind, z.B. bei dem Komfortmerkmal Schlaglocherkennung, muss extrem schnell reagiert werden, um die Dämpfereinstellung entsprechend anpassen zu können.

Zu dem Zweck des Austausches von Daten zwischen Teilnehmern, die an unterschiedliche Kommunikationsbusse 102, 104, 106 angeschlossen sind, ist das Gateway 140 vorgesehen. Dieses ist mit allen drei verschiedenen Bussystemen 102, 104 und 106 verbunden. Das Gateway 140 ist dazu ausgelegt, die Datenpakete, die es über den einen Kommunikationsbus empfängt, so umzusetzen, dass sie in dem Übertragungsformat des anderen Kommunikations-Busses dort weitergeleitet werden können. Wie dargestellt, ist das Gateway 140 als zentrales Gerät sowohl an den Bus 102, den Bus 104 als auch an den Bus 106 angeschlossen. Es übernimmt daher alle notwendigen Format-Umsetzungen, wenn Daten zwischen den verschiedenen Bussystemen ausgetauscht werden sollen.

Die Komponente 129, die an den Kommunikationsbus 104 des Antriebstrangs angeschlossen ist, bezeichnet eine Diagnoseschnittstelle. Hier kann ein externer Diagnosecomputer (nicht dargestellt) angeschlossen werden, über den die Fehlerspeichereinträge in den Fehlerspeichern der verschiedenen Steuergeräte abgefragt werden können.

In dem gezeigten Beispiel sind die Bussysteme 102 und 104 als CAN-Bus realisiert und der Bus 106 als CAN FD-Bus. Als physikalisches Übertragungsmedium wird in allen Bussystemen 102, 104, 106 eine verdrillte Zweidrahtleitung verwendet, an der symmetrische Differenzspannungen für die Informationsübertragung angelegt werden. Die Spannungen repräsentieren Symbole, die ein Sender gemäß dem gewünschten Bitstrom erzeugt (kodiert). Ein Empfänger verwendet den entstandenen Symbolstrom wiederum, um die enthaltenen Bits zurück zu gewinnen (dekodieren).

In dem Kommunikationsnetzwerk 102 ist eine Vorverarbeitungseinheit 110 vorgesehen. Die Vorverarbeitungseinheit 110 sorgt für eine Komprimierung des Ausgabedatenstromes eines oder mehrerer Sensoren. Dabei können Methoden der künstlichen Intelligenz Kl- als auch klassische Signalverarbeitungstechnologien zum Einsatz kommen. Diese Vorverarbeitungseinheit ist sensormodelltypspezifisch sorgt aber im Kern für eine effiziente sensoragnostische Datenübertragung.

Am Beispiel der bildverarbeitenden Stufen kann dies gut erläutert werden. In dem Fall entspricht die Vorverarbeitungseinheit 110 einer Recheneinheit, in der die konsolidierten Stufen der Bildverarbeitungssteuergeräte Abstandsregelungs-Steuergerät 133 und Notbremsassistenz-Steuergerät 132 zusammengefasst sind. Bei den bildverarbeitenden Stufen handelt es sich um sogenannte Convolutional Neural Networks (CNNs), die Merkmalskarten erstellen. Dabei kommen auch bildverarbeitende neuronale Netze zum Einsatz. Insbesondere die CNNs, die grundlegende Merkmale extrahieren, sind in der Vorverarbeitungsstufe zusammengefasst. Beispiele von solchen Merkmalen sind beispielsweise Konturen, Kanten, Kontraste, Linien, Flächen, Helligkeiten, Farben, Schärfen oder Rauschmaße. Die Stufen können darauf ausgelegt sein, die entsprechenden Merkmale zu erkennen/extrahieren oder darauf die entsprechenden Merkmale zu adaptieren. Die Adaption kann z.B. darin bestehen die entsprechenden Merkmale abzuschwächen oder zu verstärken. Beispiele von solchen Stufen ohne Anspruch auf Vollständigkeit sind: Konturenextraktionsstufen, Kantenerkennungsstufen, Kantenversteilerungsstufen, Kontrastverbesserungsstufen, Linienerkennungsstufen, Flächenerkennungsstufen, Formenerkennungsstufen, Helligkeitsanpassungsstufen, Farbenerkennungsstufen, Farbenanpassungsstufen, Schärfeerhöhungsstufen, Rauschverminderungsstufen. Die Struktur und Arbeitsweise der CNNs wird grundsätzlich als bekannt vorausgesetzt.

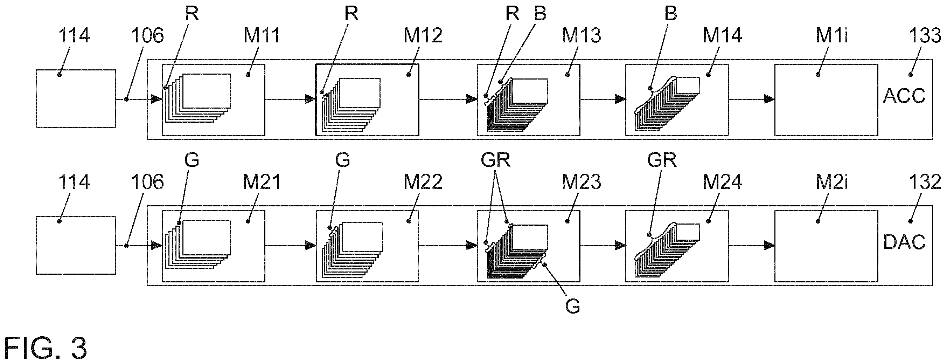

Um das Prinzip weiter zu verdeutlichen, wird zunächst die übliche Verarbeitungsweise am Beispiel von Fig. 3 erläutert. Es sind zwei parallele Verarbeitungszweige dargestellt. Gleiche Bezugszahlen bezeichnen die gleichen Komponenten wie in den Figuren 1 und 2. Der obere Zweig zeigt die Verarbeitung der Bilddaten, die von der Frontkamera 114 aufgenommen werden, in dem Abstandsregelungs-Steuergerät 133. Die Bilddaten stammen von der Frontkamera, die als Videokamera ausgeführt sein kann. Sie liefert Bilder in SD- oder HD-Auflösung mit einer typischen Bildrate von beispielsweise 25 oder 30 Hz. Die Bilddaten würden unkomprimiert über den CAN-Bus 102 zu dem Gateway-Steuergerät 140 übertragen und weiter über den CAN-FD-Bus 106 zum Abstandsregelungs-Steuergerät 133. Die stufenweise Verarbeitung der Bilddaten würde in den Stufen M11 bis M1i erfolgen. Dabei könnten die einzelnen Stufen als CNNs ausgelegt sein. Die CNNs berechnen Merkmalskarten, die in Fig. 3 als Schichten pro Stufe dargestellt sind. Welche Merkmalskarten, die in der jeweiligen Stufe extrahiert werden, gleich oder äquivalent sind, ist in Fig. 3 hervorgehoben. In der Verarbeitungsstufe M11 ist die unterste Merkmalskarte äquivalent zu der zweitobersten Merkmalskarte in der Verarbeitungsstufe M21. In der Verarbeitungsstufe M12 sind die beiden Merkmalskarten, die auf die unterste Merkmalskarte folgen äquivalent zu den drei Merkmalskarten in der Verarbeitungsstufe M21, die auf die drittunterste Merkmalskarte folgen. Zunächst erfolgt in der Stufe M11 eine grundlegende Bearbeitung wie Kontrastverbesserung, Schärfeverbesserung oder Rauschverminderung. In den nachfolgenden Stufen M12 bis M1i wird die Bildbearbeitung immer komplexer, so dass darin auch ganze Bildfolgen und komplexe Konzepte wie Gesichter oder Fahrzeuge erkannt und verarbeitet werden. Dies mündet in der Erkennung realer Objekte im Umfeld des Fahrzeuges. Bei der Abstandregelung muss zumindest das vorausfahrende Fahrzeug erkannt und auch der Abstand zum vorausfahrenden Fahrzeug bestimmt werden.

Der untere Zweig zeigt die Verarbeitung der Bilddaten im Notbremsassistenz-Steuergerät 132. Darin werden auch die Bilddaten der Frontkamera 114 ausgewertet. Die Bilddaten würden ebenfalls über das Gateway-Steuergerät 140 zum dem Notbremsassistenz-Steuergerät 132 gelangen. Die Bildauswertung würde in den Stufen M21 bis M2i erfolgen. Dabei würde eine ganz ähnliche Bildauswertung erfolgen, wie im oberen Zweig. Schlussendlich geht es ebenfalls darum den Abstand zum vorausfahrenden Fahrzeug zu ermitteln. Zusätzlich sollte aber auch die Geschwindigkeit der Annäherung an das vorausfahrende oder entgegenkommende Fahrzeug ermittelt werden. Dadurch wird die Bildbearbeitung in den hinteren Stufen unterschiedlich sein. Hinzu kommt aber auch, dass andere Verkehrsteilnehmer / Objekte erkannt werden müssen, so dass auch deshalb eine tiefergehende Bildauswertung stattfinden muss. Die mehrfache Bildauswertung in parallelen Zweigen ist in Teilen redundant, energieaufwändig und erfordert einen erhöhten Hardwareaufwand. Hinzu kommt, dass die Bilddaten ggfs, mehrfach zu den verschiedenen bildverarbeitenden Steuergeräten übertragen werden müssen. Das kann je nach Kommunikationsbus ein Problem bzgl. der Busauslastung bedeuten.

Beide Funktionen Abstandsregelungs-Steuergerät und Notbremsassistenz verarbeiten, auf getrennten Steuergeräten die Sensor-Rohdaten der angeschlossenen Sensorik. Dabei werden in der ersten Vorverarbeitung neben einer Bereinigung der Daten (Kontrastanpassung, Zuschnitt) mithilfe von Filtern (klassische Bildverarbeitung oder gelernte Faltungskerne) verschiedene Merkmalskarten (sogenannte Filterkanäle) aus den Sensorrohdaten erzeugt. Wie beschrieben können solche Merkmalskarten beispielsweise Verteilungen von Kanten, Farbübergängen, Kontraständerungen, ... betreffen (vgl. Schicht M11 und Schicht M21 in Fig.3). Diese Merkmalskarten werden dann in der Folge der Verarbeitung zu Karten für die Verteilung höherwertigerer Merkmale (Muster, Kantenzüge, Formen) erweitert (vgl. Schicht M12/M13 und Schicht M22/M23 in Fig. 3).

Dabei gibt es in den verschiedenen Verarbeitungstiefen äquivalente Merkmalskarten (vollkommen gleiche oder durch lineare Kombination ineinander überführbare Filterkanäle) zwischen beiden Funktionen: sowohl das Notbremsassistent-Steuergerät 132 als auch das Abstandsregelungs-Steuergerät 133 sind sensibel für Kanten (Schicht M11), erkannte Fahrzeuge, Objekte auf der Fahrbahn und den Verlauf der Fahrspur (höherwertige Merkmale). Die getrennte, redundante Berechnung dieser Merkmale ist überflüssig und zeit- und energieintensiv. Im Rahmen einer Sensorfusion (z.B. Front-Kamera 114 und Radar-Sensor 112) kann dies auch die Fusion der beiden Sensorsignale und die (gemeinsame, getrennte oder teilweise getrennte) Verarbeitung der von beiden Funktionen genutzten Sensorinformationen betreffen.

In Fig. 3 sind die Merkmalskarten, die in den Verarbeitungsstufen M11 und M12 mit R markiert sind gleich oder äquivalent zu den Merkmalskarten, die in den Verarbeitungsstufen M21 und M22 mit G markiert sind. Äquivalent heißt hierbei, dass die Merkmalskarten G entweder identisch zu oder (lineare) Kombinationen von den Merkmalskarten R sind. Die mit B markierten Merkmalskarten in den nachfolgenden Stufen sind nicht äquivalent zu den mit GR markierten Merkmalskarten und müssen in jedem Fall individuell berechnet werden, um ein korrektes Funktionieren der Systeme sicherzustellen.

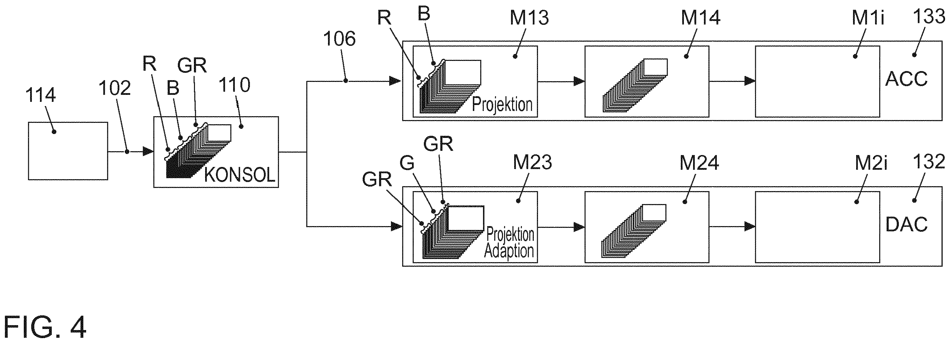

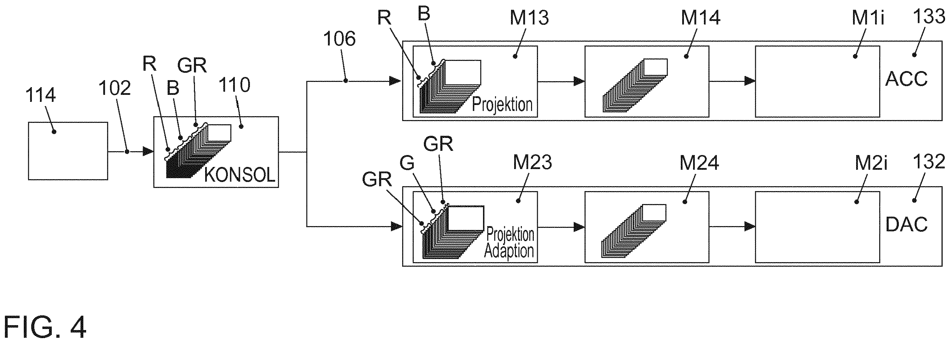

Deshalb ist ein Vorschlag der Erfindung die Verarbeitung in den parallelen Zweigen zumindest zum Teil zu konsolidieren. Dazu wird die Vorverarbeitungsstufe 110 eingesetzt. Das Prinzip der konsolidierten Verarbeitung mit Vorverarbeitungsstufe 110 ist in der Fig. 4 gezeigt.

In der erfindungsgemäßen Vorverarbeitungseinheit 110 werden nun sensornah alle für die Ausführung des Notbremsassistenten 132 und des Abstandsregelungs-Steuergerätes 133 notwendigen Merkmalskarten gemeinsam berechnet (Datenbereinigung, Sensorfusion, Merkmalsberechnung) und die Ergebnisse dann über das Fahrzeugbordnetz an die Steuergeräte 133, 132 für beide Assistenzsysteme weitergegeben.

Die Verarbeitung in der Vorverarbeitungsstufe 110 stellt eine funktionsspezifische Komprimierung der Sensorinformationen dar und ist unabhängig vom Sensormodell. Funktionsspezifisch bedeutet hierbei ausdrücklich nicht eine Abhängigkeit von einer Teilfunktionalität, sondern vielmehr eine Spezifizität gegenüber der gesamten folgenden Verarbeitungskette beispielsweise des (teil)automatischen Fahrens. Die komprimierten Sensordaten erlauben ein verlustfreies Weiterverarbeiten der Informationen durch Folgekomponenten (ohne Verwendung der Sensor-Rohdaten), nicht aber zwangsläufig ein verlustfreies oder ansatzweise verlustfreies Wiederherstellen der Sensor-Rohdaten. Es werden also alle semantisch, wie auch physikalisch für die Weiterverarbeitung relevanten Eigenschaften der Sensor-Rohdaten übertragen. Die Komprimierung ergibt sich z.B. durch eine Filterung (Beispiel Rauschverminderung) oder durch die Extraktion der Merkmale, wobei dann z.B. nur die Lage der Merkmale im Bild durch die Merkmalskarten übertragen werden müssen und nicht mehr der eigentliche Bildinhalt für diese Merkmale. Im Beispiel von Fig. 4 wird die Bearbeitung in den Stufen M11 und M21 bzw. M12 und M22 konsolidiert. Diese Stufen brauchen dann nicht mehr in den Steuergeräten 133 und 132 vorgesehen werden. Erst ab der nächsten Stufe M13 bzw. M23 erfolgt die Bildbearbeitung wieder individuell in den Steuergräten 133 und 132. Es werden nur noch die konsolidierten Ergebnisse der Bildbearbeitung in der Vorverarbeitungsstufe 110 zum Gateway 140 und weiter zu den Steuergeräten 133 und 132 übertragen. Dabei kann es nötig sein, dass zumindest in einem der Steuergeräte 133 und 132 eine Adaption / Projektion der Ergebnisse vor Weiterverarbeitung erfolgen muss. Andernfalls wäre es sonst nicht möglich diese Stufe in die Vorverarbeitungseinheit 110 zu integrieren. Die Adaption besteht in einer Rechenoperation (Transformation), die mit den übertragenen Ergebnissen im Ziel-Steuergerät noch durchgeführt werden muss um die Daten für die individuelle Weiterverarbeitung im Ziel-Steuergerät vorzubereiten. Hier können die verschiedensten Rechenoperationen zum Einsatz kommen. Beispiele von Koordinaten-Transformationen ohne Anspruch auf Vollständigkeit sind: Skalierungen, Translationen, Drehungen, Spiegelungen, Scherungen. Aber auch andere Transformationen wie Linearkombinationen von Filterkanälen kommen in Betracht. Da es bei der Auslegung des Steuergeräteverbundes bekannt ist, welche Steuergeräte vorhanden sind, die die vorverarbeiteten Bilddaten benötigen, können die einzelnen Steuergeräte mit der jeweils zugehörigen Adaptionsschicht ausgestattet werden um die Anpassung der übertragenen Ergebnisse zu berechnen.

In der Vorverarbeitungseinheit 110, werden sensornah alle für die Ausführung des Notbremsassistenten 132 und des Abstandsregelungs-Steuergerätes 133 notwendigen Merkmalskarten gemeinsam berechnet (Datenbereinigung, Sensorfusion). Das sind die mit R, B und GR markierten Merkmalskarten. Die Ergebnisse werden dann über das Fahrzeugbordnetz an die Steuergeräte 133 und 132 für beide Assistenzsysteme weitergegeben. An das Abstandsregelungs-Steuergerät 133 gehen die Merkmalskarten R, B; an den Notbremsassistenten 132 gehen die Merkmalskarten R, GR. Die für die Ausführung des Notbremsassistenten 132 notwendigen Merkmalskarten G können dann über die entsprechenden (Linear)Kombinationen aus den mit R gekennzeichneten Merkmalskarten berechnet werden. Die konsolidierte Wahrnehmung kann hierbei in Form einer fest definierten Schnittstelle bereitgestellt werden (Top-Down-Ansatz) oder aus der berechneten Konsolidierung der beiden Funktionen entstehen (Bottom-Up-Ansatz).

In einer weitergehenden Ausführungsform, könnte der nach Vorverarbeitung noch verbleibende Rest der Bilder in der Vorverarbeitungseinheit 110 ebenfalls komprimiert werden. Hierfür wären die bekannten Kompressionsmethoden im Bereich der VideoCodierung wie MPEG2 Videocodierung, JPEG-Codierung, H.264-Codierung, usw. verfügbar. In diesem Fall müsste allerdings im empfangenden Steuergerät eine entsprechende Decodierung stattfinden, um die Bilder weiter bearbeiten zu können. Zu beachten ist hierbei, dass die genannten Videocodierungsverfahren verlustbehaftet sind. Es muss also sichergestellt werden, dass die Verluste sich nicht so auswirken, dass die gewünschten Objekte wie, Straßenschilder, Fahrbahnmarkierungen, Schlaglöcher, Fahrzeuge, Fußgänger, usw. im dekodierten Bild nicht mehr erkannt werden können. Es gibt allerdings auch verlustfreie Methoden der Bild-Komprimierung, die zur Verfügung stehen und alternativ eingesetzt werden können.

Eine andere Art der Komprimierung kann durch eine der Methoden der Header-Komprimierung erlangt werden. Beispiele sind Robust Header Compression ROHC und van Jacobson TCP/IP Header Compression, die insbesondere für den Bereich Ethernet interessant sind um die Busauslastung zu verringern.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

In einer erweiterten Ausführungsform würde auch die Funktion der Schlaglocherkennung des Fahrwerk-Steuergerätes 131 mit konsolidiert werden. Auch in dem Fahrwerk-Steuergerät 131 findet eine Bildauswertung von den Bildern der Frontkamera 114 statt. Dadurch wird die Effizienz des Gesamtsystems nochmals verbessert.

Eine weitere Anwendungsmöglichkeit besteht auch bei der gemeinsamen Verwendung eines Heckradarsystems für den Spurwechselassistenten (überwacht den nachfolgenden Verkehr auf der eigenen und den Nachbarspuren) und dem Ausparkassistenten (überwacht den Querverkehr beim Ausparken).

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise werden das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

### Bezugszeichenliste

- 10: Fahrzeug
- 102: Datenbus - Fahrerassistenz
- 104: Datenbus - Antrieb
- 106: Datenbus - Fahrwerk
- 110: Vorverarbeitungseinheit
- 111: On-Board Unit
- 112: RADAR-Sensor
- 113: Rückfahrkamera
- 114: Front-Kamera
- 121: Motor-Steuergerät
- 122: ESP-Steuergerät
- 123: Getriebe-Steuergerät
- 124: Raddrehzahl-Sensor
- 125: Raddrehzahl-Sensor
- 126: Raddrehzahl-Sensor
- 127: Raddrehzahl-Sensor
- 129: Diagnoseschnittstelle
- 131: Fahrwerk-Steuergerät
- 132: Fahrerassistenz-Steuergerät
- 133: Abstandsregel-Steuergerät
- 134: LCD-Anzeigeeinheit
- 140: Gateway
- M11 - M1i: verschiedene Stufen zur Berechnung von Merkmalskarten (Pfad 1)
- M21 - M2i: verschiedene Stufen zur Berechnung von Merkmalskarten (Pfad 2)

## Patentansprüche

1. Verfahren zur Verarbeitung von Sensordaten in einer Anzahl von Steuergeräten, wobei die Steuergeräte über wenigstens ein Kommunikationsbus (102, 104, 106) mit dem mindestens einen Sensor (112 - 114) verbunden sind, wobei die Sensordaten des wenigstens einen Sensors (112 - 114), von wenigstens zwei verschiedenen Steuergeräten (131 - 133) stufenweise verarbeitet werden, wobei wenigstens eine Verarbeitungsstufe in beiden Steuergeräten (131 - 133) übereinstimmt oder zumindest soweit äquivalent sind, dass die Ergebnisse der Verarbeitung durch eine Umrechnung ineinander übergeführt werden können, **dadurch gekennzeichnet, dass** eine Vorverarbeitungseinheit (110) vorgesehen wird, der die Sensordaten des wenigstens einen Sensors (112 - 114) zugeführt werden, wobei in der Vorverarbeitungseinheit (110) die Verarbeitung der Sensordaten in der wenigstens einen übereinstimmenden Verarbeitungsstufe (M11 & M21, M12 & M22, M13 & M23) durchgeführt wird, und die bearbeiteten Sensordaten an die wenigstens zwei verschiedenen Steuergeräte (131 - 133) zur individuellen Weiterverarbeitung weitergeleitet werden.

2. Verfahren nach Anspruch 1, wobei die Umrechnung zur Überführung der Rechenergebnisse in dem Steuergerät durchgeführt wird, dass die Rechenergebnisse in der umgerechneten Form für die individuelle Weiterverarbeitung benötigt.

3. Verfahren nach Anspruch 1 oder 2, wobei der wenigstens eine Sensor (112 - 114) ein bildgebender Sensor ist und die wenigstens zwei verschiedenen Steuergeräte (131 - 133) zwei bildverarbeitende Steuergeräte betreffen.

4. Verfahren nach Anspruch 3, wobei die stufenweise Verarbeitung des bildgebenden Sensors (112 - 114) einer Bildverarbeitung entspricht bei der eine Filterung und/oder eine Bildverarbeitung mittels neuronalen Netzes, insbesondere eines Convolutional Neural Network CNN durchgeführt wird.

5. Verfahren nach Anspruch 3, wobei durch die Bildverarbeitung in einer Stufe (M11, M21, M12, M22) ein typisches Merkmal im Bild extrahiert wird und eine Merkmalskarte gebildet wird.

6. Verfahren nach Anspruch 5, wobei eine Anzahl von typischen Merkmalen extrahierenden Stufen (M11, M21, M12, M22) in der Vorverarbeitungseinheit (110) vorgesehen wird.

7. Verfahren nach Anspruch 5 oder 6, wobei die typischen Merkmale eines oder mehrere der Merkmale, Kanten, Konturen, Linien, Flächen, Kontrast, Helligkeit, Farbe, Schärfe, Rauschanteil, betreffen.

8. Verfahren nach Anspruch 6 oder 7, wobei die Vorverarbeitungseinheit (110) entweder als separate Recheneinheit an den Kommunikationsbus (102, 104, 106) angeschlossen wird oder als Modul eines Steuergerätes, das die Sensordaten verarbeitet oder als Modul eines zentralen Gateway-Steuergerätes (140) vorgesehen wird.

9. Verfahren nach einem der vorhergehenden Ansprüche, wobei der wenigstens eine Kommunikationsbus (102, 104, 106) ein serieller Kommunikationsbus von dem Typ eines CAN-Busses, entsprechend Controller Area Network-Bus, eines CAN-FD Busses, entsprechend Controller Area Network-Bus Flexible Data Rate, oder eines FlexRay-Busses, oder eines Ethernet-Busses ist.

10. Vorverarbeitungseinheit für ein Kommunikationssystem, **dadurch gekennzeichnet, dass** die Vorverarbeitungseinheit mit einer Schnittstelle für einen Kommunikationsbus (102, 104, 106) versehen ist, über den die Vorverarbeitungseinheit die Sensordaten von wenigstens einem Sensor (112 - 114) empfängt, wobei die Vorverarbeitungseinheit (110) wenigstens eine Verarbeitungsstufe (M11 & M21, M12 & M22, M13 & M23) für die Verarbeitung der Sensordaten aufweist, wobei die Vorverarbeitungseinheit so ausgelegt ist, dass sie die bearbeiteten Sensordaten über dieselbe Schnittstelle für den Kommunikationsbus oder über eine andere Schnittstelle an wenigstens zwei verschiedene Steuergeräte (131 - 133) zur individuellen Weiterverarbeitung weiterleiten.

11. Vorverarbeitungseinheit nach Anspruch 10, wobei der wenigstens eine Sensor (112 - 114) ein bildgebender Sensor ist und die wenigstens zwei verschiedenen Steuergeräte (131 - 133) zwei bildverarbeitende Steuergeräte betreffen, wobei die stufenweise Verarbeitung der Sensordaten des bildgebenden Sensors (112 - 114) einer Bildverarbeitung entspricht bei der eine Filterung und/oder eine Bildverarbeitung mittels eines oder mehrerer neuronalen Netze, insbesondere eines Convolutional Neural Network CNN stattfindet.

12. Vorverarbeitungseinheit nach Anspruch 11, wobei die Bildverarbeitung in einer Stufe (M11, M21, M12, M22) ein typisches Merkmal im Bild extrahiert und eine Merkmalskarte berechnet.

13. Vorverarbeitungseinheit nach Anspruch 11 oder 12, wobei das typische Merkmal eines oder mehrere der Merkmale, Kanten, Konturen, Linien, Flächen, Kontrast, Helligkeit, Farbe, Schärfe, Rauschanteil, betrifft.

14. Vorverarbeitungseinheit nach einem der Ansprüche 10 bis 13, wobei die Vorverarbeitungseinheit (110) entweder als separate Recheneinheit ausgeführt ist, die an den Kommunikationsbus (102, 104, 106) anschließbar ist oder als Modul eines Steuergerätes, das die Sensordaten verarbeitet oder als Modul eines zentralen Gateway-Steuergerätes (140).

15. Fahrzeug, **dadurch gekennzeichnet, dass** in dem Fahrzeug eine Vorverarbeitungseinheit (110) nach einem der Ansprüche 10 bis 14 verbaut ist.
